(19) Europäisches Patentamt
European Patent Office
Office européen des brevets

(11) **EP 1 968 186 A1**

(12) **EUROPÄISCHE PATENTANMELDUNG**

(43) Veröffentlichungstag:
**10.09.2008 Patentblatt 2008/37**

(51) Int Cl.:
***H02P 27/14*** *(2006.01)* ***H02M 7/487*** *(2007.01)*

(21) Anmeldenummer: **07405071.7**

(22) Anmeldetag: **07.03.2007**

(84) Benannte Vertragsstaaten:
**AT BE BG CH CY CZ DE DK EE ES FI FR GB GR HU IE IS IT LI LT LU LV MC MT NL PL PT RO SE SI SK TR**
Benannte Erstreckungsstaaten:
**AL BA HR MK RS**

(71) Anmelder: **ABB Schweiz AG**
**5400 Baden (CH)**

(72) Erfinder:
• **Burzanowska, Halina**
**5417 Untersiggenthal (CH)**

• **Stulz, Christian**
**8008 Zürich (CH)**
• **Bohren, Patrick**
**5600 Lenzburg (CH)**

(74) Vertreter: **ABB Patent Attorneys**
**c/o ABB Schweiz AG,**
**Intellectual Property (CH-LC/IP),**
**Brown Boveri Strasse 6**
**5400 Baden (CH)**

(54) **Verfahren zum Betrieb einer elektrischen Maschine**

(57) Es wird ein Verfahren zum Betrieb einer elektrischen Maschine (1) angegeben, bei dem die elektrische Maschine (1) phasenmässig mit einer einen Gleichspannungskreis (3) aufweisenden Umrichterschaltung (2) verbunden ist und der Gleichspannungskreis (3) durch einen ersten Kondensator ($C_1$) und durch einen in Serie zum ersten Kondensator ($C_1$) geschalteten zweiten Kondensator ($C_2$) gebildet ist und am ersten Kondensator ($C_1$) einen ersten Hauptanschluss ($V_+$), am zweiten Kondensator ($C_2$) einen zweiten Hauptanschluss ($V_-$) und einen durch die zwei seriell verbundenen Kondensatoren ($C_1, C_2$) gebildeten Teilanschluss (NP) aufweist, und bei dem jede Phase (u, v, w) der Umrichterschaltung (2) durch Leistungshalbleiterschalter der Umrichterschaltung (2) mit dem ersten Hauptanschluss ($V_+$), mit dem zweiten Hauptanschluss ($V_-$) oder mit dem Teilanschluss (NP) nach einer ausgewählten Schaltzustandskombination (SK) von Schaltzuständen verbunden wird, wobei die Schaltzustandskombination (SK) in Abhängigkeit der vorhergehenden Schaltzustandskombination ($SK_v$) und in Anhängigkeit von Referenzwerten des Drehmoments der elektrischen Maschine, des magnetischen Statorflusses der elektrischen Maschine und des Potentials am Teilanschluss (NP) ausgewählt wird. Zur Vermeidung von Ungleichheiten in Gleichspannungen an Kondensatoren des Gleichspannungskreises wird die Schaltdauer ($t_{SKNPP}$) einer jeden Schaltzustandskombination ($SK_{NPP}$) zur Verbindung genau einer Phase (u, v, w) mit dem Teilanschluss (NP) kleiner oder gleich der Schaltdauer ($t_{SK}$) der übrigen Schaltzustandskombinationen (SK) gewählt.

Fig. 1

## Beschreibung

### Technisches Gebiet

Die Erfindung bezieht sich auf das Gebiet der Betriebsverfahren elektrischer Maschinen. Sie geht aus von einem Verfahren zum Betrieb einer elektrischen Maschine gemäss dem Oberbegriff des unabhängigen Anspruchs.

### Stand der Technik

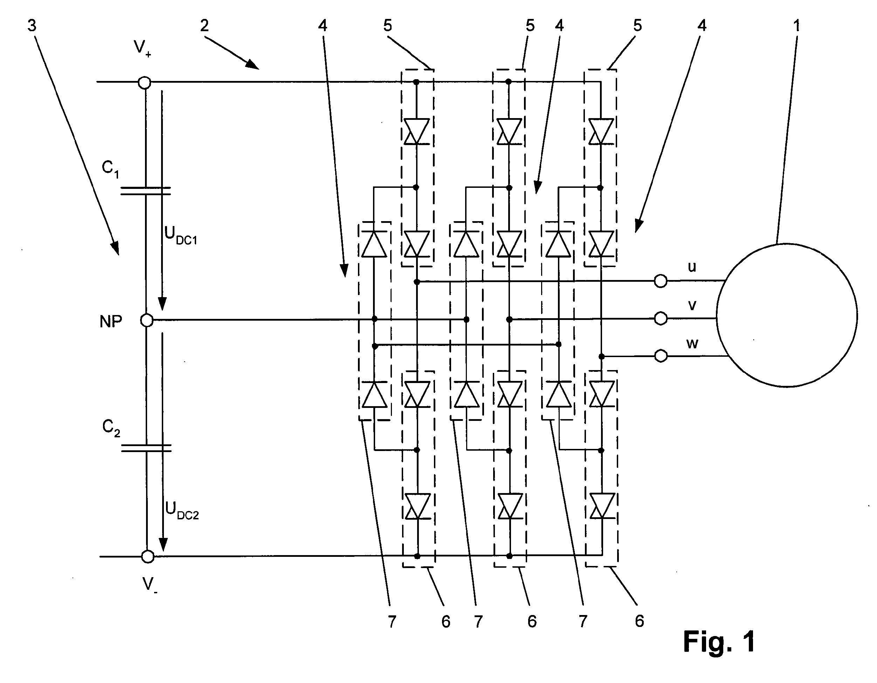

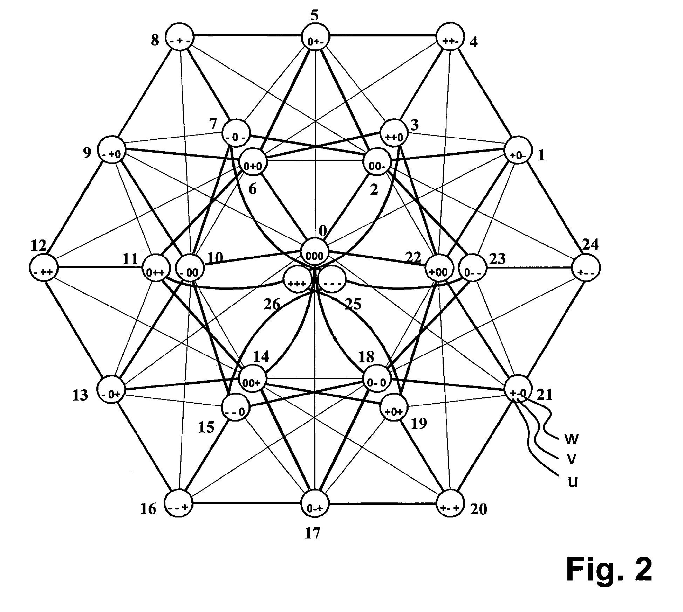

Heute werden in vielen Anwendungen Hochleistungsspannungsumrichterschaltungen eingesetzt. Eine solche Umrichterschaltung schaltet gängigerweise drei Spannungsniveaus und wird häufig zum Betrieb von elektrischen Maschinen, insbesondere in Synchron- und Asynchronmaschinen (rotierende elektrische Maschinen), aber auch in Linearmaschinen, eingesetzt, welche elektrischen Maschinen üblicherweise drei Statorwicklungen aufweisen. Bei einem gängigen Verfahren zum Betrieb einer elektrischen Maschine ist diese phasenmässig mit einer solchen einen Gleichspannungskreis aufweisenden Umrichterschaltung zur Schaltung von allgemein m Spannungsniveaus verbunden, wobei m ≥ 2 ist. Der Gleichspannungskreis ist bei einer Umrichterschaltung zur Schaltung von typischerweise drei Spannungsniveaus durch einen ersten Kondensator und durch einen in Serie zum ersten Kondensator geschalteten zweiten Kondensator gebildet, wobei der Gleichspannungskreis zudem am ersten Kondensator einen ersten Hauptanschluss, am zweiten Kondensator einen zweiten Hauptanschluss und einen durch die zwei seriell verbundenen Kondensatoren gebildeten Teilanschluss aufweist. Weiterhin umfasst die Umrichterschaltung zur Schaltung von drei Spannungsniveaus Leistungshalbleiterschalter, welche in üblicher Weise verschaltet sind. In Fig. 1 ist dazu eine Ausführungsform einer gängigen dreiphasigen Umrichterschaltung zur Schaltung von drei Spannungsniveaus gezeigt. Verfahrensmässig werden die Phasen der Umrichterschaltung allgemein mit dem Gleichspannungskreis nach einer ausgewählten Schaltzustandskombination von Schaltzuständen der Leistungshalbleiterschalter der Umrichterschaltung verbunden. Bei einer Umrichterschaltung zur Schaltung von drei Spannungsniveaus werden die Phasen der Umrichterschaltung demgemäss mit dem ersten Hauptanschluss, mit dem zweiten Hauptanschluss oder mit dem Teilanschluss nach einer ausgewählten Schaltzustandskombination von Schaltzuständen der Leistungshalbleiterschalter der Umrichterschaltung verbunden. In einem in Fig. 2 gezeigten Zustandsdiagramm sind diese Schaltzustandkombinationen und deren Übergänge zueinander gezeigt, wobei der Schaltzustand "+" für eine Verbindung der entsprechenden Phase mit dem ersten Hauptanschluss, der Schaltzustand "-" für eine Verbindung der entsprechenden Phase mit dem zweiten Hauptanschluss und der Schaltzustand "0" für eine Verbindung der entsprechenden Phase mit dem Teilanschluss steht.
Die Auswahl der entsprechenden Schaltzustandkombinationen erfolgt beispielsweise nach der bekannten "Direkten Drehmomentregelung " (DTC - Direct Torque Control). Dabei wird die Schaltzustandkombination in Abhängigkeit der vorhergehenden Schaltzustandskombination sowie in Anhängigkeit von Referenzwerten des Drehmoments der elektrischen Maschine, des magnetischen Statorflusses der elektrischen Maschine und des Potentials am Teilanschluss ausgewählt.
Während des Betriebs der Umrichterschaltung kann es nun vorkommen, dass entweder die am ersten Kondensator anliegende erste Gleichspannung grösser ist als die am zweiten Kondensator anliegende zweite Gleichspannung, oder dass die zweite Gleichspannung grösser ist als die erste Gleichspannung. Es hat sich gezeigt, dass solche Unsymmetrien besonders dann auftauchen können, wenn eine Schaltzustandskombination ausgewählt wird, welche genau eine Phase mit dem Teilanschluss verbindet. Die anderen Phasen sind dann mit dem ersten und zweiten Hauptanschluss verbunden. Gemäss Fig. 2 sind dies die Schaltzustandskombinationen 1, 5, 9, 13, 17, und 21. Solche Unsymmetrien sind aber hochgradig unerwünscht, da diese sich ungünstig auf die typischerweise mit den Phasen der Umrichterschaltung verbundene elektrische Maschine auswirken können.

### Darstellung der Erfindung

Aufgabe der Erfindung ist es deshalb, ein Verfahren zum Betrieb einer elektrischen Maschine anzugeben, bei welchem Ungleichheiten in Gleichspannungen an Kondensatoren des Gleichspannungskreises der mit der elektrischen Maschine verbundenen Umrichterschaltung weitestgehend vermieden werden können.
Beim erfindungsgemässen zum Betrieb einer elektrischen Maschine ist die elektrische Maschine phasenmässig mit einer einen Gleichspannungskreis aufweisenden Umrichterschaltung verbunden, wobei der Gleichspannungskreis durch einen ersten Kondensator und durch einen in Serie zum ersten Kondensator geschalteten zweiten Kondensator gebildet ist und am ersten Kondensator einen ersten Hauptanschluss, am zweiten Kondensator einen zweiten Hauptanschluss und einen durch die zwei seriell verbundenen Kondensatoren gebildeten Teilanschluss aufweist. Jede Phase der Umrichterschaltung wird durch Leistungshalbleiterschalter der Umrichterschaltung mit dem ersten Hauptanschluss, mit dem zweiten Hauptanschluss oder mit dem Teilanschluss nach einer ausgewählten Schaltzustandskombination von Schaltzuständen verbunden werden, wobei die Schaltzustandskombination in Abhängigkeit der vorhergehenden Schaltzustandskombination und in Anhängigkeit von Referenzwerten des Drehmoments der elektrischen Maschine, des magnetischen Statorflusses der elektrischen Maschine und des Potentials am Teilanschluss ausgewählt wird. Erfindungsgemäss wird nun die Schaltdauer einer jeden Schaltzustandskombination zur Verbindung genau einer Phase mit dem Teilanschluss kleiner oder gleich der Schaltdauer der übrigen Schaltzustandskombinationen gewählt. Damit wird eine solche Schaltzustandskombination zur Verbindung genau einer Phase mit dem Teilanschluss nur für einen minimale Zeitdauer ausgewählt und die Phasen entsprechend verbunden, bevor als nächstes eine der übrigen Schaltzustandskombinationen gewählt wird und die Phasen entsprechend verbunden werden. Dadurch, dass die Schaltdauer derjenigen Schaltzustandskombinationen, welche genau eine Phase mit dem Teilanschluss und die restlichen Phasen mit dem ersten und zweiten Hauptanschluss verbinden, kleiner oder gleich der Schaltdauer der übrigen Schaltzustandskombinationen gewählt wird, beeinflussen die Schaltzustandskombinationen zur Verbindung genau einer Phase mit dem Teilanschluss die an den Kondensatoren des Gleichspannungskreises anliegenden Gleichspannungen vorteilhaft nicht oder nur in sehr geringem Masse, so dass Ungleichheiten der Gleichspannungen und damit Unsymmetrien weitestgehend vermieden werden können.

Diese und weitere Aufgaben, Vorteile und Merkmale der vorliegenden Erfindung werden aus der nachfolgenden detaillierten Beschreibung bevorzugter Ausführungsformen der Erfindung in Verbindung mit der Zeichnung offensichtlich.

**Kurze Beschreibung der Zeichnungen**

Es zeigen:

Fig. 1    eine Ausführungsform einer dreiphasigen Umrichterschaltung zur Schaltung von drei Spannungsniveaus und

Fig. 2    ein Zustandsdiagramm mit Schaltzustandkombinationen der Phasen der Umrichterschaltung,

Die in der Zeichnung verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen. Die beschriebenen Ausführungsformen stehen beispielhaft für den Erfindungsgegenstand und haben keine beschränkende Wirkung.

**Wege zur Ausführung der Erfindung**

In Fig. 1 ist eine Ausführungsform einer dreiphasigen Umrichterschaltung 2 zur Schaltung von drei Spannungsniveaus gezeigt, wobei eine elektrische Maschine 1 phasenmässig mit einem Gleichspannungskreis 3 Umrichterschaltung 2 verbunden ist. Gemäss Fig. 1 ist der Gleichspannungskreis 3 durch einen ersten Kondensator $C_1$ und durch einen in Serie zum ersten Kondensator $C_1$ geschalteten zweiten Kondensator $C_2$ gebildet, wobei $C_1$ wertemässig im Wesentlichen gleich $C_2$

ist. Der Gleichspannungskreis 3 gemäss der beispielhaften Ausführungsform einer Umrichterschaltung zur Schaltung von drei Spannungsniveaus nach Fig. 1 weist am ersten Kondensator $C_1$ einen ersten Hauptanschluss $V_+$, am zweiten Kondensator $C_2$ einen zweiten Hauptanschluss $V_-$ und einen durch die zwei seriell verbundenen Kondensatoren $C_1$, $C_2$ gebildeten Teilanschluss NP auf. Darüber hinaus umfasst die Umrichterschaltung gemäss Fig. 1 ein für jede Phase u, v, w vorgesehenes Teilumrichtersystem 4, welches jeweils durch eine erste Schaltgruppe 5, durch eine zweite Schaltgruppe 6 und durch eine dritte Schaltgruppe 7 gebildet ist, wobei jede Schaltgruppe 5, 6, 7 durch zwei in Serie geschaltete Leistungshalbleiterschalter gebildet ist. Weiterhin ist bei jedem Teilumrichtersystem 4 die erste Schaltgruppe 5 mit dem ersten Hauptanschluss $V_+$ und die zweite Schaltgruppe 6 mit dem zweiten Hauptanschluss $V_-$ verbunden. Ferner ist die erste Schaltgruppe 5 mit der zweiten Schaltgruppe 6 seriell verbunden, wobei der Verbindungspunkt der ersten Schaltgruppe 5 mit der zweiten Schaltgruppe 6 einen Phasenanschluss bildet. Die dritte Schaltgruppe 7, welche als Klemmschaltgruppe ausgebildet ist, ist mit der ersten Schaltgruppe 5, insbesondere mit dem Verbindungspunkt der zwei in Serie geschalteten Leistungshalbleiterschalter der ersten Schaltgruppe 5, verbunden. Zudem ist die dritte Schaltgruppe 7 mit der zweiten Schaltgruppe 6, insbesondere mit dem Verbindungspunkt der zwei in Serie geschalteten Leistungshalbleiterschalter der zweiten Schaltgruppe 6, verbunden. Darüber hinaus ist die dritte Schaltgruppe 7, insbesondere der Verbindungspunkt der zwei in Serie geschalteten Leistungshalbleiterschalter der dritten Schaltgruppe 7, mit dem Teilanschluss NP verbunden. Die Leistungshalbleiterschalter der ersten und zweiten Schaltgruppe 5, 6 sind gemäss Fig. 1 als ansteuerbare bidirektionale Leistungshalbleiterschalter ausgebildet, wobei die Leistungshalbleiterschalter der dritten Schaltgruppe 7 als unidirektionale nicht-ansteuerbare Leistungshalbleiterschalter ausgebildet sind. Es ist aber auch denkbar, dass auch die Leistungshalbleiterschalter der dritten Schaltgruppe 7 als ansteuerbare rückwärtsleitende Leistungshalbleiterschalter ausgebildet sind.

Zum Betrieb der elektrischen Maschine 1 wird nun verfahrensmässig jede Phase u, v, w der Umrichterschaltung 2 durch die Leistungshalbleiterschalter der Umrichterschaltung 2 mit dem ersten Hauptanschluss $V_+$, mit dem zweiten Hauptanschluss $V_-$ oder mit dem Teilanschluss NP nach einer ausgewählten Schaltzustandskombination SK von Schaltzuständen verbunden, wobei die Schaltzustandskombination SK in Abhängigkeit der vorhergehenden Schaltzustandskombination $SK_V$ und in Abhängigkeit von Referenzwerten des Drehmoments der elektrischen Maschine, des magnetischen Statorflusses der elektrischen Maschine und des Potentials am Teilanschluss NP ausgewählt wird. Wie bereits eingangs erwähnt, ist in Fig. 2 ein Zustandsdiagramm von Schaltzustandskombinationen der Umrichterschaltung 2 zur Schaltung von drei Spannungsniveaus gezeigt, wobei der Schaltzustand "+" für eine Verbindung der entsprechenden Phase u, v, w mit dem ersten Hauptanschluss $V_+$, der Schaltzustand "-" für eine Verbindung der entsprechenden Phase u, v, w mit dem zweiten Hauptanschluss $V_-$ und der Schaltzustand "0" für eine Verbindung der entsprechenden Phase u, v, w mit dem Teilanschluss NP steht und die Linien zwischen den Schaltzustandskombinationen SK zulässige Übergänge zwischen den Schaltzustandskombinationen SK darstellen.

Nach der Erfindung wird nun die Schaltdauer $t_{SKNPP}$ einer jeden Schaltzustandskombination $SK_{NPP}$ zur Verbindung genau einer Phase u, v, w mit dem Teilanschluss NP kleiner oder gleich der Schaltdauer $t_{SK}$ der übrigen Schaltzustandskombinationen SK gewählt wird. In Fig. 2 sind Schaltzustandskombination $SK_{NPP}$ zur Verbindung genau einer Phase u, v, w mit dem Teilanschluss NP mit 1, 5, 9, 13, 17, und 21 bezeichnet, wobei bei diesen Schaltzustandskombination $SK_{NPP}$ die restlichen Phasen u, v, w mit dem ersten und zweiten Hauptanschluss $V_+$, $V_-$ verbunden werden. Die übrigen Schaltzustandskombinationen SK sind mit 0, 2, 3, 4, 6, 7, 8, 10, 11, 12, 14, 15, 16, 18, 19, 20, 22, 23, 24, 25, und 26 bezeichnet. Somit wird eine solche Schaltzustandskombination $SK_{NPP}$ zur Verbindung genau einer Phase u, v, w mit dem Teilanschluss NP nur für eine minimale bzw. verringerte Zeitdauer $t_{SKNPP}$ ausgewählt und die Phasen u, v, w entsprechend mit den Anschlüssen $V_+$, $V_-$, NP des Gleichspannungskreise 3 verbunden, bevor als nächstes eine der übrigen Schaltzustandskombinationen SK gewählt wird und die Phasen u, v, w dann entsprechend mit den Anschlüssen $V_+$, $V_-$, NP des Gleichspannungskreises 3 verbunden werden. Dadurch, dass die Schaltdauer $t_{SKNPP}$ derjenigen Schaltzustandskombinationen $SK_{NPP}$, welche genau eine Phase u, v, w mit dem Teilanschluss NP und die restlichen Phasen u, v, w mit dem ersten und zweiten Hauptanschluss $V_+$, $V_-$ verbinden, kleiner oder gleich der Schaltdauer $t_{SK}$ der übrigen Schaltzustandskombinationen SK gewählt wird, beeinflussen die Schaltzustandskombinationen SK zur Verbindung genau einer Phase u, v, w mit dem Teilanschluss NP die an den Kondensatoren $C_1$, $C_2$ des Gleichspannungskreises anliegenden Gleichspannungen vorteilhaft nicht oder nur in sehr geringem Masse, so dass Ungleichheiten der Gleichspannungen und damit Unsymmetrien weitestgehend vermieden werden können.

Als weitere Ausführungsform der Erfindung hat es sich als Vorteil erwiesen, dass zunächst aus an den Kondensatoren $C_1$, $C_2$ anliegenden Gleichspannungen $U_{DC1}$, $U_{DC2}$ ein Gleichspannungsdifferenzwert $\overline{U_{NP}}$ gebildet wird. Der Gleichspannungsdifferenzwert $\overline{U_{NP}}$ wird dabei vorzugsweise nach folgender Formel generiert:

$$\overline{U_{NP}} = \left| U_{DC1} - U_{DC2} \right|$$

Ferner wird der Gleichspannungsdifferenzwerts $\overline{U_{NP}}$ dann auf einen Schwellwert $U_{DCS}$ hin überwacht. Die Schaltdauer $t_{SKNPP}$ einer jeden Schaltzustandskombination $SK_{NPP}$ zur Verbindung genau einer Phase u, v, w mit dem Teilanschluss NP wird dann kleiner oder gleich der Schaltdauer $t_{SK}$ der übrigen Schaltzustandskombinationen SK gewählt, falls der Schwellwert $U_{DCS}$ überschritten wird. Bei Unterschreiten des Schwellwertes $U_{DCS}$ bleibt die Schaltzustandskombination $SK_{NPP}$ zur Verbindung genau einer Phase u, v, w mit dem Teilanschluss NP solange ausgewählt, wie zum Beispiel von einer Regelung wie zum Beispiel der "Direkten Drehmomentregelung " (DTC - Direct Torque Control) zu Erzielung eines bestimmten Zustandes der elektrischen Maschine gefordert. Besonders vorteilhaft lassen sich damit elektrische Maschinen mit tiefen Ausgangsfrequenzen und grossen Impedanzen betreiben.

Vorzugsweise wird die kürzeste Schaltdauer $t_{SK}$ der übrigen Schaltzustandskombinationen SK im Bereich zwischen 10μs und 100 μs gewählt. Da nach der Erfindung die Schaltdauer $t_{SKNPP}$ einer jeden Schaltzustandskombination $SK_{NPP}$ zur Verbindung genau einer Phase u, v, w mit dem Teilanschluss NP kleiner oder gleich der Schaltdauer $t_{SK}$ der übrigen Schaltzustandskombinationen SK gewählt wird, kann sichergestellt werden, dass selbst bei einer, wie vorstehend beschrieben, sehr kurzen Schaltdauer $t_{SK}$ der übrigen Schaltzustandskombinationen SK, die Schaltdauer $t_{SKNPP}$ der Schaltzustandskombinationen $SK_{NPP}$ zur Verbindung genau einer Phase u, v, w mit dem Teilanschluss NP mit Vorteil nur sehr kurz ausgewählt werden und damit eine Verbindung der Phasen u, v, w mit den Anschlüssen $V_+$, $V_-$, NP des Gleichspannungskreises 3 gemäss diesen Schaltzustandskombinationen $SK_{NPP}$ dann vorteilhaft auch nur sehr kurz erfolgt.

**Bezugszeichenliste**

1   elektrische Maschine
2   Umrichterschaltung zur Schaltung von drei Spannungsniveaus
3   Gleichspannungskreis
4   Teilumrichtersystem
5   erste Schaltgruppe
6   zweite Schaltgruppe
7   dritte Schaltgruppe


**Patentansprüche**

**1.**  Verfahren zum Betrieb einer elektrischen Maschine (1),

   bei dem die elektrische Maschine (1) phasenmässig mit einer einen Gleichspannungskreis (3) aufweisenden Umrichterschaltung (2) verbunden ist und der Gleichspannungskreis (3) durch einen ersten

Kondensator ($C_1$) und durch einen in Serie zum ersten Kondensator ($C_1$) geschalteten zweiten Kondensator ($C_2$) gebildet ist und am ersten Kondensator ($C_1$) einen ersten Hauptanschluss ($V_+$), am zweiten Kondensator ($C_2$) einen zweiten Hauptanschluss ($V_-$) und einen durch die zwei seriell verbundenen Kondensatoren ($C_1$, $C_2$) gebildeten Teilanschluss (NP) aufweist, und

bei dem jede Phase (u, v, w) der Umrichterschaltung (2) durch Leistungshalbleiterschalter der Umrichterschaltung (2) mit dem ersten Hauptanschluss ($V_+$), mit dem zweiten Hauptanschluss ($V_-$) oder mit dem Teilanschluss (NP) nach einer ausgewählten Schaltzustandskombination (SK) von Schaltzuständen verbunden wird, wobei die Schaltzustandskombination (SK) in Abhängigkeit der vorhergehenden Schaltzustandskombination ($SK_V$) und in Anhängigkeit von Referenzwerten des Drehmoments der elektrischen Maschine, des magnetischen Statorflusses der elektrischen Maschine und des Potentials am Teilanschluss (NP) ausgewählt wird, **dadurch gekennzeichnet,** **dass** die Schaltdauer ($t_{SKNPP}$) einer jeden Schaltzustandskombination ($SK_{NPP}$) zur Verbindung genau einer Phase (u, v, w) mit dem Teilanschluss (NP) kleiner oder gleich der Schaltdauer ($t_{SK}$) der übrigen Schaltzustandskombinationen (SK) gewählt wird.

2. Verfahren nach Anspruch 1, **dadurch gekennzeichnet, dass** aus an den Kondensatoren ($C_1$, $C_2$) anliegenden Gleichspannungen ($U_{DC1}$, $U_{DC2}$) ein Gleichspannungsdifferenzwert ($\overline{U_{NP}}$) gebildet wird, dass der Gleichspannungsdifferenzwerts ($\overline{U_{NP}}$) auf einen Schwellwert ($U_{DCS}$) hin überwacht wird, und dass die Schaltdauer ($t_{SKNPP}$) einer jeden Schaltzustandskombination ($SK_{NPP}$) zur Verbindung genau einer Phase (u, v, w) mit dem Teilanschluss (NP) dann kleiner oder gleich der Schaltdauer ($t_{SK}$) der übrigen Schaltzustandskombinationen (SK) gewählt wird, falls der Schwellwert ($U_{DCS}$) überschritten wird.

3. Verfahren einem der vorhergehenden Ansprüche, **dadurch gekennzeichnet, dass** die kürzeste Schaltdauer ($t_{SK}$) der übrigen Schaltzustandskombinationen (SK) im Bereich zwischen 10µs und 100 µs gewählt wird.

Fig. 1

EP 1 968 186 A1

Fig. 2

**Europäisches Patentamt**

**EUROPÄISCHER RECHERCHENBERICHT**

Nummer der Anmeldung

EP 07 40 5071

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | CIRRINCIONE M ET AL: "A low-cost three-level converter for low-power electrical drives with induction motor applied to direct torque control" POWER ELECTRONICS SPECIALISTS CONFERENCE, 2004. PESC 04. 2004 IEEE 35TH ANNUAL AACHEN, GERMANY 20-25 JUNE 2004, PISCATAWAY, NJ, USA,IEEE, US, 20. Juni 2004 (2004-06-20), Seiten 4571-4577, XP010739136 ISBN: 0-7803-8399-0 * Seite 4571, Spalte 2, Zeile 12 - Seite 4573, Spalte 2, Zeile 11 * ----- | 1-3 | INV. H02P27/14 H02M7/487 |
| Y | EP 1 221 761 A1 (YASKAWA DENKI SEISAKUSHO KK [JP]) 10. Juli 2002 (2002-07-10) * Absätze [0051] - [0060] * ----- | 1,3 | |
| Y | DE 43 12 019 A1 (MITSUBISHI ELECTRIC CORP [JP]) 4. November 1993 (1993-11-04) * Seite 13, Zeile 2 - Zeile 24 * ----- | 2 | |
| A | KOLOMYJSKI W ET AL: "Adaptive space vector modulator for three-level NPC PWM inverter-fed induction motor" ADVANCED MOTION CONTROL, 2006. 9TH IEEE INTERNATIONAL WORKSHOP ON MARCH 2006, PISCATAWAY, NJ, USA,IEEE, März 2006 (2006-03), Seiten 523-528, XP010918231 ISBN: 0-7803-9511-1 * Seite 524, Spalte 1, Zeile 1 - Seite 525, Spalte 1, Zeile 18 * ----- | 1-3 | RECHERCHIERTE SACHGEBIETE (IPC) H02P H02M |
| A | EP 0 571 755 A2 (HITACHI LTD [JP] HITACHI LTD [DE]) 1. Dezember 1993 (1993-12-01) * Zusammenfassung * ----- | 1-3 | |

Der vorliegende Recherchenbericht wurde für alle Patentansprüche erstellt

| Recherchenort | Abschlußdatum der Recherche | Prüfer |
|---|---|---|
| München | 10. August 2007 | Frapporti, Marc |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
........................................................................
& : Mitglied der gleichen Patentfamilie, übereinstimmendes Dokument

EPO FORM 1503 03.82 (P04C03)

**EP 1 968 186 A1**

**ANHANG ZUM EUROPÄISCHEN RECHERCHENBERICHT**
**ÜBER DIE EUROPÄISCHE PATENTANMELDUNG NR.**     EP 07 40 5071

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

10-08-2007

| Im Recherchenbericht angeführtes Patentdokument | | Datum der Veröffentlichung | Mitglied(er) der Patentfamilie | | Datum der Veröffentlichung |
|---|---|---|---|---|---|
| EP 1221761 | A1 | 10-07-2002 | CN | 1369133 A | 11-09-2002 |
| | | | WO | 0113504 A1 | 22-02-2001 |
| | | | TW | 476183 B | 11-02-2002 |
| | | | US | 6490185 B1 | 03-12-2002 |
| DE 4312019 | A1 | 04-11-1993 | CA | 2092946 A1 | 14-10-1993 |
| | | | CH | 689436 A5 | 15-04-1999 |
| | | | JP | 3229897 B2 | 19-11-2001 |
| | | | JP | 5292754 A | 05-11-1993 |
| | | | NO | 931190 A | 14-10-1993 |
| | | | US | 5355297 A | 11-10-1994 |
| EP 0571755 | A2 | 01-12-1993 | AU | 3691393 A | 11-11-1993 |
| | | | CN | 1077825 A | 27-10-1993 |
| | | | DE | 69301061 D1 | 01-02-1996 |
| | | | DE | 69301061 T2 | 08-08-1996 |
| | | | US | 5361196 A | 01-11-1994 |
| | | | ZA | 9302798 A | 16-11-1993 |

EPO FORM P0461

Für nähere Einzelheiten zu diesem Anhang : siehe Amtsblatt des Europäischen Patentamts, Nr.12/82

9